# EUROPÄISCHE PATENTSCHRIFT

(11) **EP 2 439 056 B1**
(45) Veröffentlichungstag und Bekanntmachung des Hinweises auf die Patenterteilung: **11.12.2013**
(21) Anmeldenummer: 10013483.2
(22) Anmeldetag: 09.10.2010
(51) Int. Cl.: B29C 65/54, B29C 45/14, B29C 65/72, B62D 1/06

(54) **Verfahren zur Herstellung eines Dekorteiles und ein solches Dekorteil**
Method for manufacturing a decorative part and such a decorative part
Procédé de fabrication d'une pièce décorative et une telle pièce décorative

(43) Veröffentlichungstag der Anmeldung: 11.04.2012
(73) Patentinhaber: Quin GmbH, 71277 Rutesheim (DE)
(72) Erfinder: Bieniek, Klaus, 75438 Knittlingen (DE); Zwießler, Norbert, 97901 Altenbuch (DE); Artem, Rudi, 73734 Esslingen (DE); Weisser, Thomas, 75175 Pforzheim (DE); Link, Manfred, 71334 Waiblingen (DE); Friedrich, Uwe-Joachim, 76684 Östringen (DE)
(74) Vertreter: Grünecker, Kinkeldey, Stockmair & Schwanhäusser

(56) Entgegenhaltungen:
- EP-A1- 1 442 957
- EP-A1- 1 884 442

## Beschreibung

Die Erfindung betrifft ein Verfahren zur Herstellung eines Dekorteiles insbesondere für ein Kraftfahrzeug sowie ein Dekorteil der im Oberbegriff des Anspruchs 8 angegebenen Gattung.

Die vorliegende Erfindung betrifft insbesondere ein Verfahren zur Herstellung eines Dekorteils, wie es aus der EP 1 884 442 bekannt ist. Bei diesem Stand der Technik werden auf zwei aus Halbschalen ausgebildeten Trägerteilen Furnierlagen befestigt. Die Trägerteile bilden an gege-nüberliegenden Seiten, welche nach dem Fügen der Trägerteile aneinander anliegen, jeweils einen vortretenden Vorsprung aus. Dieser vortretende Vorsprung wird zum definierten Absche-ren einer Dekorlage an den Trägerteilen genutzt. Die Dekorlage wird mit dem Trägerteil mittels Kleben verbunden. Das Verkleben der Dekorlage mit dem Trägerteil erfolgt über eine Gegen-form, welche die Dekorlage gegen das Trägerteil drückt und anlegt, sodass zwischen den Ober-flächen des Dekorteils und des Trägerteils ein hoher Druck erzielt werden kann.

Ein ähnliches Verfahren zur Herstellung eines Dekorteils unter Einschluss eines Kernes zwi-schen zwei schalenförmigen Trägerteilen offenbart die EP 1 442 957 A1.

In Kraftfahrzeugen werden zahlreiche Dekorteile eingesetzt, die im Innenraum des Fahrzeuges ggf. auch funktionale Aufgaben übernehmen, insbesondere aber ein hochwertiges optisches Erscheinungsbild liefern müssen. Dies gilt insbesondere für Lenkräder und vergleichbare Bauteile, die eine äußere Sichtseite und mindestens zwei entlang einer Verbindungsfuge verbundene Trägerteile aufweisen. Die Trägerteile sind der Sichtseite zugewandt mit einer Dekorschicht versehen. Die Dekorschicht selbst ist ihrerseits auf der Sichtseite mit einer transparenten Deckschicht versehen. Die Dekorschicht kann beispielsweise aus Edelholzfurnier, Gewebe, Metallblech oder dergleichen gebildet sein, deren optisches Erscheinungsbild durch die transparente Deckschicht zur Geltung kommt. Die transparente Deckschicht dient dabei auch dem Schutz der Dekorschicht sowie der Erzeugung der gewünschten haptischen Eigenschaften.

Unter Berücksichtigung der hohen Anforderungen der optischen und haptischen Qualität sowie die Alterungsbeständigkeit ist der Fertigungsaufwand für solche Dekorteile hoch. Die beiden Trägerteile müssen einschließlich der darauf aufgebrachten Dekorschichten an der Verbin-dungsfuge derart sauber miteinander verbunden bzw. verklebt werden, dass eine optisch und haptisch nicht ins Gewicht fallende Verbindungsnaht entsteht. Dies erfordert einen oder mehrere aufwendige Arbeitsschritte. Zusätzlich ist die transparente Deckschicht aufzubringen, wozu verbreitet ein Dickschichtklarlack zum Einsatz kommt. Letzterer macht bei der Fertigung einen kostenintensiven manuellen Einsatz insbesondere bei der Nachbearbeitung erforderlich. Es sind deshalb Bestrebungen im Gange, die transparente Deckschicht im sogenannten "in mould coating" mit einer werkzeugfallenden Oberfläche herzustellen. Hierbei wird der Rohling des Dekorteils in eine Spritzgießform eingelegt und das transparente Kunststoffmaterial zur Bildung der Deckschicht eingespritzt. Bei derartigen Herstellverfahren kommen zwei verschiedene Kunststoffe zum Einsatz:

In einer ersten Variante wird ein thermoplastischer Kunststoff in einem Extruder aufgeschmolzen und unter hohem Druck in die Spritzgießform eingespritzt. Da der thermoplastische Kunststoff aus langkettigen Polymeren gebildet ist und deshalb selbst in Form einer Schmelze sehr hochviskos ist, sind hohe Spritzdrücke und Temperaturen erforderlich. Der in die Form eingelegte Rohling muss diesen Drücken und Temperaturen standhalten können, weshalb ein solches Verfahren nicht für alle Dekorteile einsetzbar ist. Insbesondere können solche Dekorteile nicht umspritzt werden, die einen Querschnitt mit einer geschlossenen umlaufenden Sichtseite aufweisen, wie dies beispielsweise bei dem Kranz eines Lenkrades der Fall ist. Typischerweise weist der Kranz eines Lenkrades einen tragenden Metallkern auf, der mit einem stoßabsorbierenden Hartschaum umschäumt ist. Der Hartschaum würde einschließlich seiner außenseitig aufgebrachten Dekorschicht unter Einwirkung des hohen Spritzdruckes nachgeben, so dass Maß- und Formhaltigkeit nicht gewährleistet werden können.

Alternativ werden sogenannte Reaktionskunststoffe eingesetzt, bei denen mindestens zwei separate Kunststoffkomponenten in einem unmittelbar außenseitig der Spritzgießform angeordneten Mischkopf miteinander vermischt werden, wodurch dann eine chemische Reaktion in Gang gesetzt wird, die zu einer Polymerreaktion (Polyaddition, Polymerisation) führt. Die miteinander gemischten Komponenten werden in die Spritzgießform eingespritzt. Solange die Polymerreaktion noch nicht abgeschlossen ist, ist die Viskosität des Gemisches im Vergleich zu einer Kunststoffschmelze gering, so dass niedrigere Spritzdrücke angewandt werden können. Es besteht damit die Möglichkeit, auch empfindlichere Rohlinge von Dekorteilen zu umspritzen.

Hierbei entstehen aber auch zahlreiche Nachteile: Der Aushärte- bzw. Polyadditionsvorgang dauert eine gewisse Zeit, innerhalb derer der umspritzte Rohling in der Spritzgießform verbleiben muss, was die Taktzeiten der Fertigung begrenzt. Um dennoch eine kurze Taktzeit erreichen zu können, werden Reaktionskunststoffe mit einer sehr kurzen Topfzeit von etwa vier bis sieben Sekunden angesetzt. Die Topfzeit ist damit kürzer als die Takt- bzw. Zykluszeit, innerhalb derer das Werkstück bzw. das Dekorteil im Formwerkzeug verbleibt. Danach kann zwar das fertige Dekorteil aus der Form entnommen werden. Am Ausgang des Mischkopfes befindet sich aber ebenfalls aus- oder angehärtetes Kunststoffmaterial, was zu Pfropfenbildung bzw. Verstopfung des Spritzkanals führen kann. Zumindest aber besteht die Gefahr, dass einzelne ausgehärtete Partikel im nachfolgenden Spritzgussvorgang mit in die Formmulde gelangen und dort zu optischen Verunreinigungen und damit zur Minderung der Produktqualität führen.

Problematisch ist auch die hohe Affinität der Reaktionskunststoffe zu Metall. Das eingespritzte Kunststoffmaterial neigt zum Anhaften an der Formmuldenoberfläche. Die Entformung des fertigen Bauteils ist schwierig, weshalb der Einsatz von Trennmitteln erforderlich wird. In diesem Falle ist jedoch entgegen der Bestrebung keine echte werkzeugfallende Oberfläche gebildet, da der zusätzliche Einsatz eines Trennmittels erforderlich ist. Es wurden auch Versuche unternommen, den Reaktionskunststoff mit einem trennenden Additiv zu versehen. Das Additiv ist zunächst gleichmäßig im Kunststoffinaterial verteilt und entfaltet seine volle Wirkung erst nach einer gewissen Zeit, die es braucht, um sich an der Oberfläche abzusetzen. Bei den vorgenannten kurzen Topfzeiten ist die verfügbare Zeitspanne jedoch viel zu gering, um eine hinreichende Entfaltung der Additivtrennwirkung zu erzielen.

Ein weiteres, nach dem Stand der Technik noch ungelöstes Problem besteht darin, dass bei Dekorteilen mit mindestens zwei Trägerteilen letztere vor dem Umspritzen mit der Dekorschicht aufwendig und präzise mit einander verbunden werden müssen, damit das Umspritzungsergebnis auch im Nahtbereich zufriedenstellend ist. Die mindestens zwei Trägerteile müssen in einem separaten vorbereitenden Arbeitsschritt derart sauber miteinander beispielsweise durch Ultraschallschweißen oder durch Kleben gefügt werden, dass auch die darauf aufgebrachten Dekorschichten praktisch nahtfrei aufeinander stoßen, ohne dass es im Kantenbereich zu Ablösungen, Ausbrüchen und insbesondere Verunreinigung der Sichtseite beispielsweise durch den eingesetzten Klebstoff kommt. Trotz hohem Aufwand ist deshalb ein kostentreibender Ausschuss unvermeidlich.

Der Erfindung liegt die Aufgabe zugrunde, ein Verfahren zur Herstellung eines Dekorteiles mit mindestens zwei Trägerteilen anzugeben, welches eine optisch einwandfreie und mechanisch zuverlässige Verbindung der beiden Trägerteile miteinander bei verbesserter Wirtschaftlichkeit möglich macht.

Diese Aufgabe wird durch ein Verfahren mit den Merkmalen des Anspruchs 1 gelöst.

Der Erfindung liegt des Weiteren die Aufgabe zugrunde, ein Dekorteil der eingangs angegebenen Gattung derart weiterzubilden, dass durch seinen konstruktiven Aufbau die Verbindung von mindestens zwei seiner Trägerteile untereinander vereinfacht ist.

Diese Aufgabe wird durch ein Dekorteil mit den Merkmalen des Anspruchs 8 gelöst.

Nach dem erfindungsgemäßen Verfahren werden die Trägerteile des Dekorteiles zunächst derart auf Distanz zueinander gehalten, dass zwischen Kanten der Trägerteile, die an der Verbindungsfuge aneinander angrenzen, ein Spalt gebildet ist. Das kann beispielsweise durch geeignete Ausgestaltung der Formwerkzeughälften oder durch Fixiermittel von zumindest einem der Trägerteile herbeigeführt werden. Die Fixierung mit Spalt kann beispielsweise reibschlüssig erfolgen. Insbesondere werden die Trägerteile des Dekorteiles unter Bildung des Spaltes in einer ersten Raststufe rastend auf Distanz zueinander gehalten. Die Rastung stellt sicher, dass ein definiertes Spaltmaß von insbesondere kleiner 2 mm und insbesondere von etwa 1,5 mm eingehalten wird. Die Rastung kann leicht manuell oder auch automatisiert herbeigeführt werden. Bevorzugt ist hierzu zumindest eines der Trägerteile mit ersten Fixiermitteln versehen, die die Trägerteile während des Herstellverfahrens derart auf Distanz zueinander halten, dass zwischen den Kanten der Trägerteile, die an der Verbindungsfuge aneinander angrenzen, der vorgenannte Spalt gebildet ist.

Die Trägeteile werden in mindestens zwei Formwerkzeughälften eingelegt. In die mindestens zwei Formwerkzeughälften wird ein insbesondere transparenter Reaktionskunststoff derart eingespritzt, dass der Reaktionskunststoff in den Spalt eindringt.

Daran anschließend werden die auf Distanz zueinander gehaltenen Trägerteile derart aufeinander zu bewegt, dass sich der Spalt schließt, solange der transparente Reaktionskunststoff noch flüssig ist. In diesem Zustand bzw. in dieser Relativposition zueinander werden die Trägerteile zumindest solange gegeneinander fixiert, bis der Reaktionskunststoff zur Bildung einer Klebenaht in der Verbindungsfuge hinreichend ausgehärtet ist.

Die Fixierung bei geschlossenem Spalt kann ebenfalls durch Fixiermittel der Formhälften erfolgen. Insbesondere ist zumindest eines der Trägerteile mit zweiten Fixiermitteln versehen, die die Trägerteile während des Herstellverfahrens bei geschlossenem Spalt gegeneinander fixieren. Auch hierbei kann die Fixierung beispielsweise reibschlüssig erfolgen. Bevorzugt werden die Trägerteile bei geschlossenem Spalt in einer zweiten Raststufe rastend gegeneinander fixiert. Die zweite Raststufe stellt sicher, dass die beiden Trägerteile einschließlich der darauf aufgebrachten Dekorschichten quasi spaltfrei aneinander anliegen und diese Position auch ohne Einwirkung einer äußeren Haltekraft, aber unter Einwirkung des Spritzdruckes beibehalten wird.

Zweckmäßig sind die ersten Fixiermittel und/oder die zweiten Fixiermittel durch Rasthaken sowie den Rasthaken zugeordnete Rastkanten gebildet. Bevorzugt sind die ersten Fixiermittel und/oder die zweiten Fixiermittel unmittelbar angrenzend an die Kanten der Trägerteile angeordnet, wodurch die Fixierwirkung unmittelbar dort eintritt, wo es auf die genaue Lagefixierung ankommt: Die Kanten können praktisch nicht nachgeben und dadurch ihre gegenseitige exakte Lageausrichtung nicht verlieren. Zur weiteren Unterstützung der exakten Lageausrichtung sind die ersten Fixiermittel und die zweiten Fixiermittel entlang der Verbindungsfuge wechselseitig angeordnet, so dass in der ersten Fixierstufe und auch in der zweiten Fixierstufe keine technisch relevanten Abschnitte ohne fixierende Stützung vorhanden sind.

Zusätzlich kann es zweckmäßig sein, dass angrenzend an die Kanten Zentriermittel insbesondere in Form von Zentriervorsprüngen zur gegenseitigen Ausrichtung der Trägerteile angeordnet sind. Auch diese Zentriermittel tragen dazu bei, dass die Kanten nicht einmal abschnittsweise gegeneinander auswandern können, sondern dass vielmehr die Kanten der einzelnen Trägerteile während des gesamten Fügevorganges zumindest näherungsweise entlang ihrer gesamten Länge exakt gegeneinander ausgerichtet sind.

In der spaltfrei gegeneinander fixierten Position werden die Trägerteile zumindest solange gegeneinander fixiert, bis der insbesondere transparente Reaktionskunststoff zur Bildung einer Klebenaht in der Verbindungsfuge hinreichend ausgehärtet ist. Die hinreichende Aushärtung bedeutet hier nicht notwendigerweise eine vollständige Aushärtung. Vielmehr muss der Härtevorgang nur so weit fortgeschritten sein, dass der umspritzte Rohling ohne Beschädigung des insbesondere transparenten Kunststoffinaterials aus der Spritzgießform entnommen werden kann.

Insgesamt ist dadurch ein Verfahren und ein Dekorbauteil geschaffen, wobei zunächst ein präziser Spalt geschaffen ist, in den das Kunststoffinaterial zur Bildung der Verbindungsfuge definiert eindringen kann. Der Spalt wird durch den Spritzgussvorgang gleichmäßig ausgefüllt. Beim anschließenden Schließen des Spaltes zwischen den Formteilhälften wird eine nahezu unsichtbare und spaltfreie Klebenaht ohne Fehlstellen und mit hoher Belastbarkeit erzielt. Die Unsichtbarkeit der Klebenaht wird noch durch den optionalen Einsatz eines transparenten Kunststoffmaterials unterstützt. Beim späteren oder gleichzeitigen Aufbringen einer transparenten Deckschicht verbinden sich die transparente Klebenaht und die transparente Deckschicht vollflächig in einer Weise, dass die Klebenaht als solche visuell und haptisch praktisch nicht mehr wahrnehmbar ist. Mechanische Integrität und ästhetischer Gesamteindruck sind bei hoher Prozesssicherheit und Produktivität miteinander kombiniert.

Es kann zweckmäßig sein, den Vorgang des Fügens und den Vorgang des Beschichtens von einander zu trennen und sequentiell auszuführen. In bevorzugter Weiterbildung werden die Trägerteile in den mindestens zwei Formwerkzeughälften bezogen auf den Querschnitt außenseitig der Dekorschicht mit dem transparenten Reaktionskunststoff derart umspritzt, dass der transparente Reaktionskunststoff auch in den Spalt eindringt. Die auf Distanz zueinander gehaltenen Trägerteile werden dann derart aufeinander zu bewegt, dass sich der Spalt schließt, solange der transparente Reaktionskunststoff noch flüssig ist. Die Trägerteile werden in dieser Position zumindest so lange gegeneinander fixiert, bis der transparente Reaktionskunststoff zur Bildung der transparenten Deckschicht auf der Außenseite der Dekorschicht und zur Bildung der einteilig monolithisch mit der Deckschicht ausgebildeten Klebenaht in der Verbindungsfuge hinreichend ausgehärtet ist.

Fügung und Transparentbeschichtung erfolgen in einem einzigen automatisierten Arbeitsgang mit im Ergebnis hohem Qualitätsniveau und geringem Ausschuss, wodurch die Wirtschaftlichkeit erheblich verbessert ist. Ohne manuelle Nacharbeitung kann in kurzen Taktzeiten eine optisch und haptisch einwandfreie Oberfläche insbesondere auch im Nahtbereich zwischen den beiden Trägerteilen erzielt werden, wobei gleichzeitig auch eine vollflächige und nach vollständiger Aushärtung auch hochbelastbare, optisch auf ein Minimum reduzierte Fügenaht gebildet ist.

In einer zweckmäßigen Weiterbildung des Verfahrens wird in die der Sichtseite zugeordneten Formwerkzeughälften je ein Einlegeteil eingelegt, wobei die Einlegeteile zur Formung der Deckschicht auf der Sichtseite vorgesehen sind. Anschließend werden die mit dem Spalt auf Distanz zueinander gehaltenen Trägerteile wischen die Formwerkzeughälften eingelegt. Die Formwerkzeughälften werden unter Bildung eines Hohlraumes zwischen der Dekorschicht und den Einlegeteilen geschlossen. Der Hohlraum wird mit dem transparenten Reaktionskunststoff ausgespritzt. Die mit dem Reaktionskunststoff überspritzten und an der Verbindungsfuge verbundenen Trägerteile werden zusammen mit den daran anhaftenden Einlegeteilen aus der Formwerkzeughälfte entnommen.

Der niederviskose, also dünnflüssige Reaktionskunststoff kann mit geringem Spritzdruck in die Form eingespritzt werden. Selbst mechanisch empfindliche Dekorteilrohlinge halten diesem geringen Spritzdruck auch dann stand, wenn die zu umspritzende Oberfläche ringförmig geschlossen ist und der Spritzdruck damit allseitig einwirkt. Das Problem der Affinität des Reaktionskunststoffes zur metallischen Formoberfläche ist durch den Einsatz der Einlegeteile behoben: Diese können als formgebende Teile an der Oberfläche des Reaktionskunststoffes haften bleiben und gemeinsam mit dem Dekorteil aus dem Formwerkzeug entnommen werden.

Je nach eingesetzter Topfzeit kann die Aushärtung bzw. Polyaddition des Kunststoffinaterials vollständig oder teilweise in der Form erfolgen. Bevorzugt werden die mit dem Reaktionskunststoff überspritzten Trägerteile zusammen mit den daran anhaftenden Einlegeteilen aus den Formwerkzeughälften entnommen, noch bevor der Reaktionskunststoff vollständig ausgehärtet bzw. polymerisiert ist. Die vollständige Aushärtung bzw. Polymerisation des Reaktionskunststoffes mit den daran anhaftenden Einlegeteilen erfolgt anschließend außerhalb der Formwerkzeughälften. Dies wird möglich durch die anhaftenden Einlegeteile, die die Oberflächenkontur des Kunststoffes trotz noch nicht abgeschlossener Polymerreaktion aufrechterhalten. Die vorgenannten Fixier- und/oder Zentriermittel halten die Trägerteile auch nach Entnahme aus den Formwerkzeughälften solange zuverlässig in Position, bis die Polymerreaktion abgeschlossen und dadurch eine tragfähige Klebeverbindung einerseits und eine belastbare Deckschichtoberfläche andererseits gebildet ist. Die Einheit aus Dekorteilen und Einlegeteilen kann aus den Formwerkzeughälften entnommen und der weiteren Aushärtung zugeführt werden, was die Gießform bereits nach kurzer Zeit für den Spritzvorgang des nächsten Teiles mit kurzer Taktzeit frei macht. Hierzu muss die Gießform lediglich mit einem neuen Satz von Einlegeteilen bestückt werden, womit sie bereit für den nächsten Spritzvorgang ist. Das erfindungsgemäße Verfahren erlaubt unter Beibehaltung kurzer Taktzeiten den Einsatz von Reaktionskunststoffen mit einer Topfzeit, die größer als die Zyklus- bzw. Taktzeit des Verfahrens bezogen auf den Verbleib des Bauteiles im Formwerkzeug ist. Das Dekorteil wird also samt den stützenden Einlegeteilen aus den Formwerkzeughälften entnommen, noch während sich der Reaktionskunststoff in einem nicht vollständig ausreagierten Zustand befindet. Hierdurch ist die Handhabbarkeit des ansonsten kritischen Reaktionskunststoffes deutlich erleichtert, da ein Verstopfen des Mischkopfes oder der Spritzkanäle nicht zu befürchten ist.

Die lange Topfzeit erlaubt auch den Einsatz eines Reaktionskunststoffes, der mit einem Additiv zur Haftverringerung an dem Einlegeteil versehen ist. Aufgrund der langen Topfzeit verbleibt genügend Zeit, dass sich das gleichmäßig gelöste und verteilte Additiv an der Trennfläche zwischen Deckschicht und Einlegeteil absetzt und dort seine volle Trennwirkung entfaltet. Nach erfolgter Aushärtung bzw. Polyaddition kann das Einlegeteil ohne weiteres von der Dekorteiloberfläche abgenommen werden, ohne dass übermäßig große Haftkräfte zu überwinden sind.

Ein Ausführungsbeispiel der Erfindung ist nachfolgend anhand der Zeichnung näher beschrieben. Es zeigen:
- Fig. 1: in einer Querschnittsdarstellung zwei noch nicht miteinander verbundene Trägerteile eines in Fig. 8 schematisch dargestellten Dekorteiles mit Einzelheiten von daran angebrachten Rastmitteln;
- Fig. 2: die Anordnung nach Fig. 1, bei der die beiden Trägerteile in einer ersten Raststufe unter Bildung eines Spaltes miteinander verrastet sind;
- Fig. 3: in einer perspektivischen Ansicht die Anordnung nach Fig. 2 mit weiteren Einzelheiten zur Anordnung von Rast- und Zentriermitteln;
- Fig. 4: in einer schematischen Querschnittsdarstellung die Anordnung nach den Fig. 2 und 3 zwischen zwei geschlossenen Formwerkzeughälften zur Umspritzung der äußeren Dekorschicht und zum gleichzeitigen Ausspritzen des Spaltes zwischen den Trägerteilen;
- Fig. 5: die Anordnung nach Fig. 3 in einer zweiten Raststufe bei geschlossenem Spalt;
- Fig. 6: die Anordnung nach Fig. 4 mit geschlossenem Spalt zwischen den beiden Trägerteilen nach Fig. 5 zur abschließenden Verbindung beider Trägerteile;
- Fig. 7: das in den Formwerkzeughälften nach Fig. 6 umspritzte und gemeinsam mit daran anhaftenden Einlegeteilen aus den Formwerkzeughälften entnommene und zur vollständigen Aushärtung vorbereitete Dekorteil;
- Fig. 8: das fertig gestellte Dekorteil nach Fig. 7 mit abgenommenen Einlegeteilen.

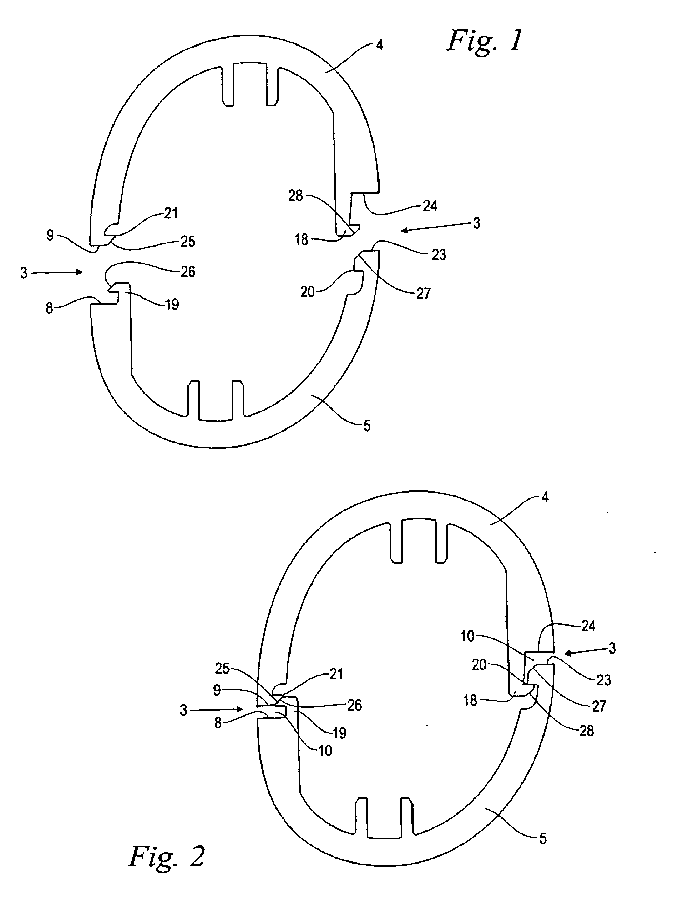

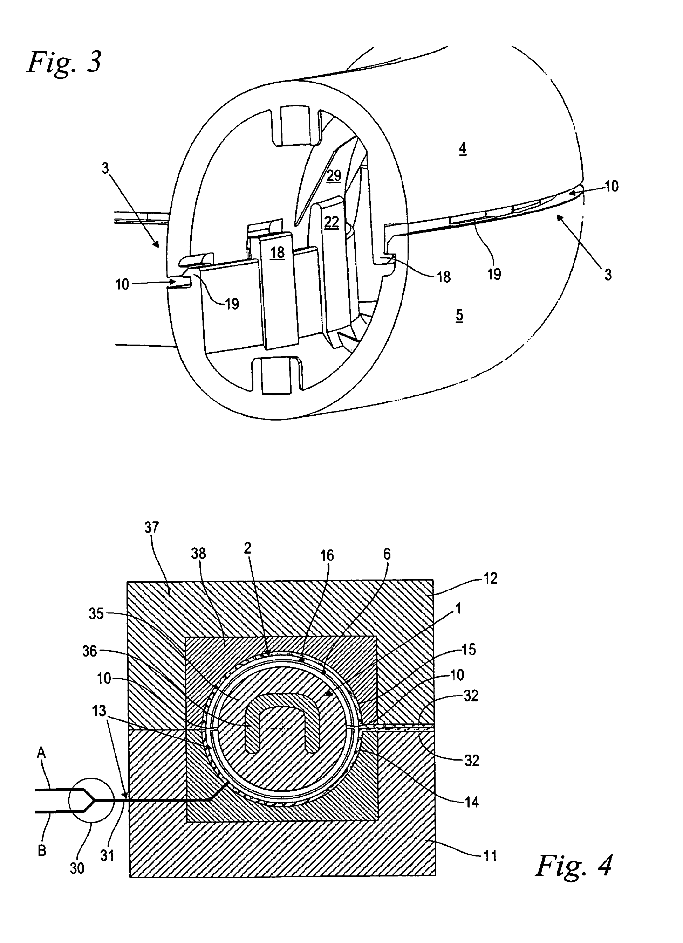

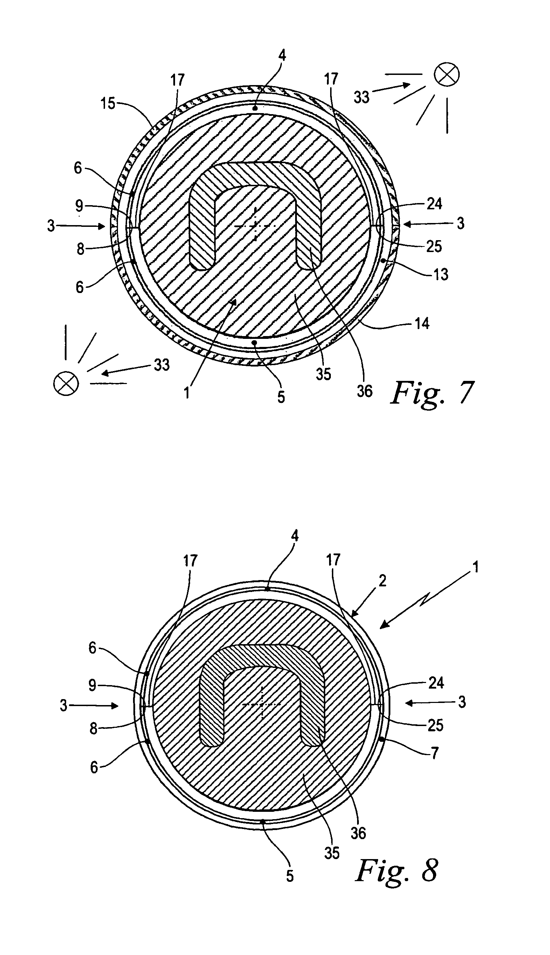

Fig. 1 zeigt in einer schematischen Querschnittsdarstellung zwei Trägerteile 4, 5 mit außenseitig vollflächig aufgebrachten, hier nicht dargestellten, aber in den Fig. 4, 6, 7, 8 gezeigten Dekorschichten 6 zur Herstellung eines in Fig. 8 im Querschnitt schematisch dargestellten Dekorteiles 1. Das Dekorteil 1 (Fig. 8) ist insbesondere für ein Kraftfahrzeug vorgesehen und im gezeigten Ausführungsbeispiel als Kranz eines Lenkrades ausgebildet. Das Dekorteil 1 (Fig. 8) umfasst nach Fig. 1 mindestens zwei, hier genau zwei entlang von Verbindungsfugen 3 zu verbindende Trägerteile 4, 5, die aber nach Fig. 1 noch nicht verbunden sind.

Zumindest eines der Trägerteile 4, 5, hier beide Trägerteile 4, 5 sind mit ersten Fixiermitteln und zweiten Fixiermitteln zur gegenseitigen Lageausrichtung beider Trägerteile 4, 5 gegeneinander versehen. Die ersten Fixiermittel sind durch Rasthaken 18 sowie den Rasthaken 18 zugeordnete Rastkanten 20 gebildet, während die zweiten Fixiermittel durch Rasthaken 19 sowie den Rasthaken 19 zugeordnete Rastkanten 21 gebildet sind. Die beiden im Querschnitt als Halbschale ausgebildeten Trägerteile 4, 5 weisen einander zugeordnete Kanten 8, 9, 23, 24 auf, wobei das eine Trägerteil 4 mit seinen Kanten 9, 24 im montierten Zustand an den gegenüberliegenden Kanten 8, 23 des weiteren Trägerteiles 5 anliegt.

Die als Rasthaken 18, 19 und Rastkanten 20, 21 ausgebildeten ersten und zweiten Fixiermittel können beispielsweise an in Fig. 4 dargestellten Einlegeteilen 14, 15 von dort ebenfalls dargestellten Formwerkzeughälften 11, 12 oder aber auch an den Formwerkzeughälften 11, 12 selbst ausgebildet sein. Im gezeigten Ausführungsbeispiel sind sie Teil der Trägerteile 4, 5 und als solche einteilig und monolithisch mit diesen als Kunststoffspritzgussteil ausgebildet. Das gleiche gilt auch für die in Fig. 3 dargestellten, als Zentriervorsprünge 22 ausgebildeten Zentriermittel zur gegenseitigen Ausrichtung der Trägerteile 4, 5. Es kann ausreichen, dass die Rasthaken 18, 19 und auch die Zentriervorsprünge 22 (Fig. 3) an nur einem der Trägerteile 4, 5 ausgebildet sind. Im gezeigten Ausführungsbeispiel sind beide Trägerteile 4, 5 wechselseitig damit versehen. In der gezeigten vorteilhaften Ausführungsform sind die ersten Fixiermittel und auch die zweiten Fixiermittel in Form der Rasthaken 18, 19 und der Rastkanten 20, 21 unmittelbar an die Kanten 8, 9 der Trägerteile 4, 5 angrenzend angeordnet. Das gleiche gilt auch für die Zentriermittel in Form der Zentriervorsprünge 22 (Fig. 3). Der Darstellung nach Fig. 1 ist noch zu entnehmen, dass die Rasthaken 18, 19 und auch die zugeordneten Rastkanten 20, 21 mit zueinander korrespondierenden Zentrierschrägen 25, 26, 27, 28 versehen sind, deren Funktionen nachfolgend beschrieben sind.

In einem ersten erfindungsgemäßen Verfahrensschritt werden die beiden Trägerteile 4, 5 ausgehend von der getrennten Position nach Fig. 1 derart aufeinander zu bewegt, dass zunächst der Rasthaken 18 mit seiner Zentrierschräge 28 auf der Zentrierschräge 27 der zugeordneten Rastkante 20 zu liegen kommt. Durch weiteres aufeinander zu Bewegen der beiden Trägerteile 4, 5 schnappt der Rasthaken 18 hinter die zugeordnete Rastkante 20, wie dies in Fig. 2 dargestellt ist. Aus der Zusammenschau der Fig. 1 und 2 ergibt sich auch, dass sich der Rasthaken 18 über die zugeordnete Kante 24 mit einem größeren Abstand erstreckt, als dies beim Rasthaken 19 relativ zur zugeordneten Kante 8 der Fall ist. Die Abstanddifferenz zwischen den Rasthaken 18, 19 und den zugeordneten Kanten 24, 8 ist derart bemessen, dass der längere bzw. höhere Rasthaken 18 entsprechend der Darstellung nach Fig. 2 gerade eben hinter seine zugeordnete Rastkante 20 einschnappen kann, während gleichzeitig der kürzere, weniger hohe Rasthaken 19 mit seiner Zentrierschräge 26 auf der Zentrierschräge 25 der zugeordneten Rastkante 21 aufliegt. Hierdurch ist nach Fig. 2 eine erste Raststufe gebildet, in der die beiden Trägerteile 4, 5 an den Verbindungsfugen 3 unter Bildung je eines Spaltes 10 zwischen den einander zugewandten Kanten 8, 9, bzw. den einander zugewandten Kanten 23, 24 auf Distanz zueinander gehalten sind. Die Breite des oder der Spalte 10 beträgt bevorzugt kleiner 2 mm und insbesondere etwa 1,5 mm.

Fig. 3 zeigt in einer perspektivischen Schnittdarstellung die Anordnung nach Fig. 2, demnach in diesem Zustand die Zentriervorsprünge 22 an Innenflächen 29 der Trägerteile 4, 5 anliegen und dadurch eine gegenseitige Zentrierung der beiden Trägerteile 4, 5 in seitlicher Richtung, also quer zur Schließrichtung der beiden Trägerteile 4, 5 bzw. in der durch die Verbindungsfugen 3 (Fig. 1) aufgespannten Ebene herbeiführen. In Fig. 3 ist außerdem zu erkennen, dass die ersten Fixiermittel und die zweiten Fixiermittel in Form der Rasthaken 18, 19 und der Rastkanten 20, 21 sowie auch die Zentriervorsprünge 22 wechselseitig entlang der Verbindungsfugen 3 angeordnet sind. Diese wechselseitige Anordnung bedeutet, dass entlang einer Verbindungsfuge 3 abwechselnd Rasthaken 18 und Rasthaken 19 sowie in bestimmten Abständen auch Zentriervorsprünge 22 angeordnet sind. Außerdem ist vorgesehen, dass bezogen auf einen Rasthaken 18 einer Verbindungsfuge 3 gegenüberliegend ein Rasthaken 19 an der anderen Verbindungsfuge 3 und umgekehrt angeordnet sind.

Die auf diese Weise vorbereiteten Trägerteile 4, 5 werden zur Herstellung des Dekorteiles 1, hier eines Lenkradkranzes, zwischen zwei Formwerkzeughälften 11, 12 entsprechend der schematischen Querschnittsdarstellung nach Fig. 4 eingelegt. In den Fig. 1 bis 3 sind der besseren Übersichtlichkeit halber nur die beiden rohen Trägerteile 4, 5 dargestellt. Tatsächlich sind beide Trägerteile 4, 5 auf ihrer äußeren Sichtseite 2 (Fig. 8) mit je einer Dekorschicht 6 versehen, wobei die Dekorschichten 6 ebenfalls wie auch die Trägerteile 4, 5 an ihren Kanten 8, 9, 23, 24 aneinander stoßen. Im Zustand nach den Fig. 2 bis 4 erstrecken sich die Spalte 10 auch zwischen den Kanten der Dekorschichten 6. Außerdem ist vorbereitend vor der Herstellung der ersten Raststufe (Fig. 2, 3) zwischen die beiden Trägerteile 4, 5 ein Kern eingelegt, der aus einem tragenden Metallkern 36 und einem umschäumten Schaumkern 35 aus einem stoßabsorbierenden Hartschaum gebildet ist.

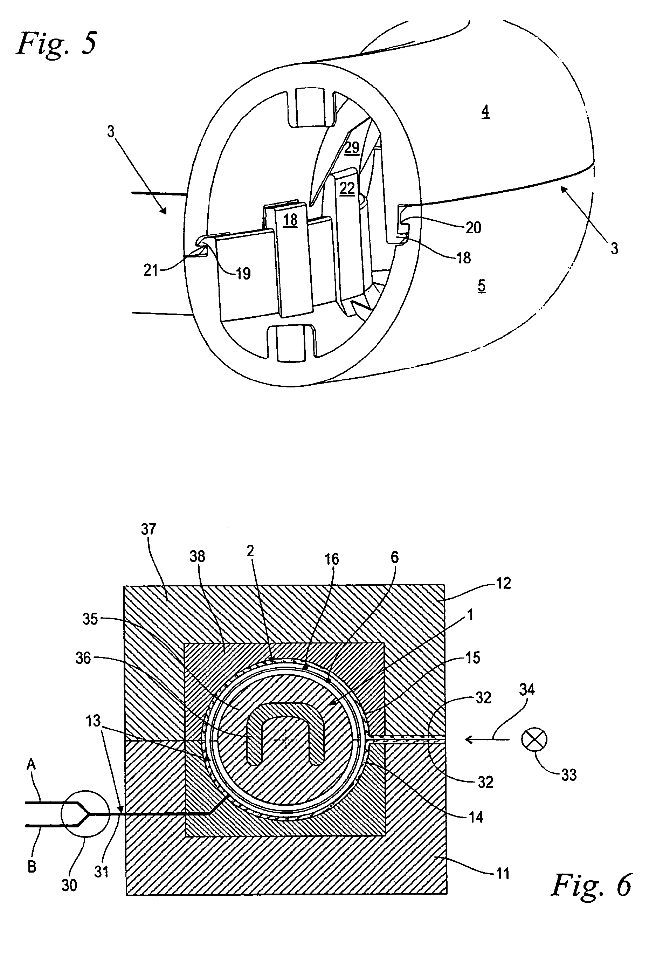

Zur Herstellung des Dekorteiles 1 oder anderer vergleichbarer Dekorteile nach dem erfindungsgemäßen Verfahren werden zumindest zwei Formwerkzeughälften 11, 12 nach Fig. 4 eingesetzt. Beide Formwerkzeughälften 11, 12 weisen je eine Formmulde auf, zu deren Bildung optional je ein Einlegeteil 14, 15 in je eine Formwerkzeughälfte 11, 12 eingelegt ist. Für die Einlegeteile 14, 15 kommen verschiedene Materialien in Betracht. Bevorzugt sind die Einlegeteile 14, 15 aus Kunststoff und im gezeigten Ausführungsbeispiel aus Polyolefin hergestellt. Dabei sind die Einlegeteile 14, 15 transparent und weisen optional angeformte Lichtleiter 32 auf, deren Funktion im Zusammenhang mit den Fig. 6, 7 näher beschrieben ist.

Darüber hinaus umfassen die Formwerkzeughälften 11, 12 je ein Grundwerkzeug 37 aus einfachem Werkzeugstahl, in das je ein Werkzeugeinsatz 38 zur Stützung der Einlegeteile 14, 15 aus höherwertigem, widerstandkräftigerem Stahl eingesetzt sind. Es kann aber auch eine Ausführung zweckmäßig sein, bei der auf Werkzeugeinsätze 38 verzichtet wird, und bei der die Einlegeteile 14, 15 direkt in eine Ausformung der Grundwerkzeuge 37 eingelegt werden. Im gezeigten Ausführungsbeispiel sind zwei Formwerkzeughälften 11, 12 vorgesehen. Bei komplizierten Querschnittsformen kann aber auch eine höhere Anzahl von Formwerkzeughälften 11, 12 und Einlegeteilen 14, 15 zweckmäßig sein. In jedem Fall ist eine solche Anzahl von Formwerkzeughälften 11, 12 mit Einlegeteilen 14, 15 zu wählen, mit der die transparente Deckschicht 7 (Fig. 8) vollständig abgeformt werden kann.

Die beiden Formwerkzeughälften 11, 12 sind in Fig. 4 geschlossen dargestellt, wobei die Einlegeteile 14, 15 in der Trennfläche zwischen den beiden Formwerkzeughälften 11, 12 bündig und geschlossen aneinander anliegen. Hierdurch begrenzen die Einlegeteile 14, 15 eine Formmulde, in die der Rohling des Dekorteiles 1 mit den beiden mit Spalten 10 auf Abstand zueinander gehaltenen Trägerteilen 4, 5 eingelegt ist. Der Rohling ist derart in die Form zwischen die Einlegeteile 14, 15 eingelegt, dass zwischen seinen Dekorschichten 6 und den den Dekorschichten 6 zugewandten Oberflächen der Einlegeteile 14, 15 ein im Querschnitt hier beispielhaft kreisringförmiger Hohlraum 16 gebildet ist.

In den vorgenannten Hohlraum 16 mündet ein schematisch angedeuteter Spritzkanal 31, an den außenseitig der Gießform ein Mischkopf 30 angeschlossen ist. Dem Mischkopf 30 werden zwei separate, niedrigviskose Kunststoffkomponenten A, B zugeführt, die im Mischkopf 30 miteinander vermischt werden. Im gemischten Zustand der Kunststoffkomponenten A, B setzt sich eine chemische Reaktion in Gang, die zu Polyaddition, Polymerisation oder einer anderen Form einer Polymerreaktion und damit zur Aushärtung führt, wodurch ein transparenter Reaktionskunststoff 13 gebildet wird. Der Reaktionskunststoff 13 kann ein Duroplast oder ein Thermoplast sein, und ist in jedem Falle transparent.

Die Topfzeit des Reaktionskunststoffes 13 beträgt bevorzugt mindestens eine Minute und liegt zweckmäßig in einem Bereich von einschließlich einer Stunde bis einschließlich zwei Stunden. Insbesondere weist der Reaktionskunststoff 13 eine Topfzeit auf, die größer als die Zyklus- bzw. Taktzeit des Verfahrens in den Formwerkzeughälften 11, 12 ist. Die Topfzeit, innerhalb derer der Reaktionskunststoff 13 verarbeitbar ist, ist also länger als der Verbleib des Dekorteiles 1 bzw. des Rohlings davon zwischen den Formwerkzeughälften 11, 12. Während dieser Topfzeit wird der Reaktionskunststoff 13 durch den Spritzkanal 31 in die Form eingespritzt, wobei der Hohlraum 16 vollständig ausgefüllt wird. Teil des Hohlraumes 16 sind auch die Spalte 10, in die der Reaktionskunststoff 13 eindringt. Außerdem kann es als Option zweckmäßig sein, dass der Reaktionskunststoff 13 zwischen die Trägerteile 4, 5 und den Schaumkern 35 eindringt. Der Einspritzvorgang dauert eine erheblich kürzere Zeit als die genannte Topfzeit. Während dessen ist die Polymerreaktion nur so wenig fortgeschritten, dass der Reaktionskunststoff 13 seine niedrige Viskosität beibehält und deshalb ein nur geringer Spritzdruck erforderlich ist. Die für sich alleine genommen elastisch nachgiebigen Einlegeteile 14, 15 liegen aber flächig in dem entsprechenden Ausformungen der Formwerkzeughälften 11, 12 an, so dass sie unter Einwirkung des Spritzdruckes nicht nachgeben können. Der geringe, allseitig auf den Rohling des Dekorteiles 1 einwirkende Spritzdruck reicht auch nicht aus, den Rohling zu verformen.

Im Anschluss an den vorgenannten Einspritzvorgang werden die auf Distanz zueinander gehaltenen Trägerteile 4, 5 derart aufeinander zu bewegt, dass sich die Spalte 10 schließen, solange der transparente Reaktionskunststoff 13 noch innerhalb seiner Topfzeit, also flüssig verdrängbar ist. Dieses Schließen bzw. aufeinander zu Bewegen der beiden Trägerteile 4, 5 kann durch nicht dargestellte Hilfsmittel wie beispielsweise Formenstempel oder beweglich angeordnete Werkzeugeinsätze 38 erfolgen.

Fig. 5 zeigt die Anordnung nach Fig. 3 in dem vorstehend beschriebenen Zustand, in dem die Spalte 10 (Fig. 3) an den Verbindungsfugen 3 geschlossen sind. Die Trägerteile 4, 5 liegen mit ihren Kanten 8, 9, 23, 24 bündig aneinander. Hierbei sind die beiden Trägerteile 4, 5 mit den eingangs beschriebenen zweiten Fixiermitteln spaltfrei gegeneinander fixiert. Ausgehend vom Zustand nach den Fig. 2, 3 sind die beiden Trägerteile 4, 5 so weit in Schließrichtung aufeinander zu bewegt, dass nun auch die Rasthaken 19 unter Bildung einer zweiten Raststufe die zugeordneten Rastkanten 21 hintergreifen. Die gegenüberliegenden Rastkanten 20 der ersten Raststufe weisen eine derart ausgeprägte Hinterschneidung auf, dass die Rasthaken 18 der ersten Raststufe dem zusätzlichen Rastweg zur zweiten Raststufe folgen können. Anstelle einer zweiten Raststufe kann aber auch wie weiter oben beschrieben eine beispielsweise reibschlüssige Fixierung beider Trägerteile 4, 5 gegeneinander zweckmäßig sein.

Fig. 6 zeigt die Anordnung nach Fig. 4 mit den beiden in der zweiten Raststufe vollständig und spaltfrei geschlossenen Trägerteilen 4, 5 nach Fig. 5. Es ist zu erkennen, dass auch die auf die Trägerteile 4, 5 aufgebrachten Dekorschichten 6 mit ihren einander zugewandten Kanten bündig aneinander anliegen. Der zuvor in die zwischenliegenden Spalte 10 (Fig. 4) eingespritzte, noch flüssige Reaktionskunststoff 13 wird durch den vorgenannten Schließvorgang der beiden Trägerteile 4, 5 aus den Spalten 10 (Fig. 3, 4) verdrängt. Das Gleiche gilt auch für eventuell zwischen die Trägerteile 4, 5 und den Schaumkern 35 eingedrungene Mengen des Reaktionskunststoffs 13. In den geschlossenen Spalten 10 verbleiben nur so geringe Restmengen des Reaktionskunststoffes 13, dass diese am späteren Dekorteil 1 (Fig. 8) kaum sichtbar sind, jedoch eine zuverlässige und hochbelastbare Verklebung zwischen den Trägerteilen 4, 5 samt ihrer Dekorschichten 6 an den Kanten 8, 9, 23, 24 sowie ggf. auch zwischen den Trägerteilen 4, 5 und dem Schaumkern 35 herbeiführen.

Im Zustand nach Fig. 6, bei dem der Hohlraum 16 vollständig mit dem Reaktionskunststoff 13 ausgespritzt ist, kann es zweckmäßig sein, bei noch geschlossenen Formwerkzeughälften 11, 12 über die an den Einlegeteilen 14, 15 optional angeformten Lichtleiter 32 ultraviolettes Licht von einer UV-Lichtquelle 33 entsprechend einem Pfeil 34 einzuspeisen. Hierdurch kann eine vollständige Härtung, zumindest aber eine Vorhärtung des Reaktionskunststoffes 13 in der Gießform herbeigeführt werden, da das UV-Licht über die Lichtleiter 32 in die transparent ausgestalteten, ebenfalls als Lichtleiter wirkenden Einlegeteile 14, 15 gleichmäßig auf den Reaktionskunststoff 13 einwirkt und dort eine Polymerreaktion initiiert oder beschleunigt. Alternativ oder zusätzlich kann es auch zweckmäßig sein, UV-Licht über separat in den Formwerkzeughälften 11, 12 verlaufende, nicht an den Einlegeteilen 14, 15 angeordnete Lichtleiter einzuspeisen.

Bevorzugt werden aber die Formwerkzeughälften 11, 12 voneinander getrennt und damit die Gießform geöffnet, noch bevor der Reaktionskunststoff 13 vollständig polymerisiert bzw. ausgehärtet ist. Bei einer Vorhärtung mittels UV-Licht oder beim Fehlen von Lichtleitern 32 ohne Einwirkung von UV-Licht erfolgt dies zu einem Zeitpunkt, an dem der Reaktionskunststoff 13 eine hinreichende Formstabilität erreicht hat, die eine Weiterverarbeitung außerhalb der Formwerkzeughälften 11, 12 ermöglicht. Die gegenseitige Lagefixierung der beiden Trägerteile 4, 5 wird dabei durch die vorstehend beschriebenen Fixier-und Zentriermittel sichergestellt. Außerdem wird sich zunutze gemacht, dass die Einlegeteile 14, 15 am Reaktionskunststoff 13 anhaften und nur lose in die Formwerkzeughälften 11, 12 eingelegt sind. Der mit dem Reaktionskunststoff 13 überspritzte Rohling wird also zusammen mit den daran anhaftenden Einlegeteilen 14, 15 aus der Gießform bzw. aus den Formwerkzeughälften 11, 12 entnommen, noch bevor der Reaktionskunststoff 13 vollständig ausgehärtet ist.

Dieser Zustand des Dekorteilrohlings ist in der schematischen Querschnittsdarstellung nach Fig. 7 gezeigt, demnach der Rohling außenseitig seiner bündig aneinander angrenzenden Dekorschichten 6 mit dem Reaktionskunststoff 13 umspritzt ist. Außenseitig des Reaktionskunststoffes 13 haften die Einlegeteile 14, 15 daran und halten das noch nicht vollständig ausgehärtete Kunststoffinaterial in Form. Die Anordnung nach Fig. 7 wird in ihrer Gesamtheit anschließend einer vollständigen Aushärtung zugeführt. Hierzu kann sie in einem nicht dargestellten Härteofen gelegt werden. Dort erfolgt die Aushärtung des Reaktionskunststoffes 13 unter Einwirkung von gegenüber der Umgebungstemperatur erhöhter Temperatur und auch unter Einwirkung von UV-Licht aus UV-Lichtquellen 33, wobei das UV-Licht durch die transparenten Einlegeteile 14, 15 hindurch zum Reaktionskunststoff 13 vordringt. Es kann aber auch zweckmäßig sein, UV-Licht oder Wärme nur alternativ oder auch gar nicht einzusetzen.

Der Reaktionskunststoff 13 ist mit einem nicht dargestellten Additiv zur Haftverringerung an den Einlegeteilen 14, 15 versehen. Aufgrund der oben genannten langen Topfzeit des Reaktionskunststoffes 13 kann das Additiv an die Trennfläche zwischen dem Reaktionskunststoff 13 und den Einlegeteilen 14, 15 gelangen und dort seine trennende Wirkung entfalten. Zur weiteren Haftverminderung trägt die Ausgestaltung der Einlegeteile 14, 15 aus einem geeigneten Kunststoffmaterial, hier aus Polyolefin bei. Nach vollständiger Aushärtung des Reaktionskunststoffes 13 können die Einlegeteile 14, 15 abgenommen werden. Vor dem Spritzvorgang nach den Fig. 4, 6 wurde deshalb auf einen separaten Auftrag von Trennmitteln auf die Innenflächen der Einlegeteile 14, 15 verzichtet.

Nachdem die Einlegeteile 14, 15 von der Anordnung nach Fig. 7 entfernt wurden, ist das Dekorteil 1 fertig gestellt, wie es in der schematischen Querschnittsdarstellung nach Fig. 8 gezeigt ist. Dort ist zu erkennen, dass der Schaumkern 35 mit dem eingeschäumten Metallkern 36 im gezeigten Querschnitt ringsum geschlossen von den beiden Trägerteilen 4, 5 umfasst ist. Auch die auf den beiden Trägerteilen 4, 5 außenseitig aufgebrachten Dekorschichten 6 sind bezogen auf den gezeigten Querschnitt ringsum geschlossen und stoßen an den Kanten 8, 9, 23, 24 (Fig. 1) bündig aneinander. Durch den zuvor nach Fig. 4 in die Spalte 10 eingespritzten Reaktionskunststoff 13 sind in dessen ausgehärtetem Zustand anstelle der zuvor geschlossenen Spalte 10 zumindest näherungsweise spaltfreie Klebenähte 17 getreten, mit denen die Dekorschichten 6 und die Trägerteile 4, 5 an ihren einander zugewandten Stirnflächen bzw. Kanten 8, 9, 23, 24 miteinander verklebt sind. Durch den ausgehärteten Reaktionskunststoff 13 kann optional auch zumindest eine partielle Verklebung zwischen den Trägerteilen 4, 5 und dem Schaumkern 35 herbeigeführt sein. Außerdem sind die der Sichtseite 2 zugewandten Dekorschichten 6 mit einer transparenten Deckschicht 7 versehen, wobei die Klebenähte 17 in den Verbindungsfugen 3 einteilig monolithisch mit der transparenten Deckschicht 7 aus dem transparenten und ausgehärteten Reaktionskunststoff 13 gebildet sind.

Die transparente Deckschicht 7 kann klarsichtig oder milchig mit oder ohne Einfärbung ausgebildet sein. Das Dekorteil 1 weist im gezeigten Ausführungsbeispiel einen Querschnitt mit einer geschlossenen umlaufenden, radial äußeren Sichtseite 2 und ebenfalls umlaufenden Dekorschichten 6 sowie Deckschichten 7 auf. Nach dem erfindungsgemäßen Verfahren bzw. in weiteren erfindungsgemäßen Ausgestaltungen des Dekorteiles 1 können aber auch unterbrochene, nur teilweise umlaufende oder in anderer Weise geformte Sichtseiten 2 mit Dekorschichten 6 und Deckschichten 7 vorgesehen sein. Außerdem kann eine Ausführung zweckmäßig sein, bei der nur eine Verbindungsfuge 3 oder aber eine höhere Anzahl von Verbindungsfugen 3 vorgesehen ist. Die Dekorschicht 6 kann beispielsweise ein Edelholzfurnier, ein Ziergewebe, ein Metallblech oder dergleichen sein.

Vorstehend ist eine Ausführungsform der Erfindung beschrieben, bei der die Klebenaht 17 in der Verbindungsfuge 3 in einem Arbeitsgang einteilig monolithisch mit der Deckschicht 7 aus dem transparenten Reaktionskunststoff 13 ausgebildet ist. Es kann aber auch zweckmäßig sein, die beiden Arbeitsschritte der Bildung der Klebenaht 17 und Bildung der Deckschicht 7 von einander zu trennen und sequentiell auszuführen. Hierbei kommen zunächst Formwerkzeughälften 11, 12 mit einem derart angepassten Hohlraum 16 zum Einsatz, dass der transparente Reaktionskunststoff 13 nur in die Verbindungsfuge 3 eintritt, nicht aber die Sichtseite 2 umfließt und deshalb auch nicht die Deckschicht 7 bildet. Nach dem Ausspritzen der Verbindungsfuge 3 werden die in oben beschriebener Weise auf Abstand zu einander gehaltenen Trägerteile 4, 5 unter Schließung des Spaltes 10 auf einander zu bewegt und fixiert, wie dies ebenfalls oben beschrieben ist, und wobei die Klebenaht 17 entsteht. Die auf diese Weise mit einander verklebten Trägerteile 4, 5 bzw. der aus ihnen gebildete Rohling wird dann anschließend in einem separaten Arbeitsgang mit einer Deckschicht 7 versehen. Dies kann durch Aufbringen beispielsweise eines transparenten PU-Dickschichtlackes geschehen. Bevorzugt erfolgt hierzu eine separate Umspritzung mit dem transparenten Reaktionskunststoff 13, der sich unter Bildung der Deckschicht 7 mit dem transparenten Reaktionskunststoff 13 der Klebenaht 17 einteilig monolithisch verbindet.

## Patentansprüche

1. Verfahren zur Herstellung eines Dekorteiles (1) insbesondere für ein Kraftfahrzeug, wobei das Dekorteil (1) einen geschlossenen Querschnitt mit einer äußeren Sichtseite (2) aufweist und insbesondere als Kranz eines Lenkrades ausgebildet ist, wobei das Dekorteil (1) mindestens zwei entlang einer Verbindungsfuge (3) zu verbindende Trägerteile (4, 5) aufweist, umfassend folgende Verfahrensschritte:
- die Trägerteile (4, 5) werden so in mindestens zwei Formwerkzeughälften (11, 12) eingelegt, dass die Trägerteile (4, 5) des Dekorteils (1) zwischen Kanten (8, 9, 23, 24) der Trägerteile (4, 5), die an der Verbindungsfuge aneinander angrenzen, über einen Spalt auf Distanz gehalten sind;
- in die mindestens zwei Formwerkzeughälften (11, 12) wird daran anschließend ein Reaktionskunststoff (13) derart eingespritzt, dass der Reaktionskunststoff (13) in den Spalt (10) eindringt;
- die auf Distanz zueinander gehaltenen Trägerteile (4, 5) werden daraufhin derart aufeinander zu bewegt, dass sich der Spalt (10) schließt, solange der Reaktionskunststoff (13) noch flüssig ist;
- die Trägerteile (4, 5) werden in dieser Position zumindest so lange gegeneinander fixiert, bis der Reaktionskunststoff (13) zur Bildung einer Klebenaht (17) in der Verbindungsfuge (3) hinreichend ausgehärtet ist.

2. Verfahren nach Anspruch 1,
**dadurch gekennzeichnet, dass** die Trägerteile (4, 5) des Dekorteiles (1) unter Bildung des Spaltes (10) in einer ersten Raststufe rastend auf Distanz zueinander gehalten werden.

3. Verfahren nach Anspruch 1 oder 2,
**dadurch gekennzeichnet, dass** die Trägerteile (4, 5) des Dekorteiles (1) bei geschlossenem Spalt (10) in einer zweiten Raststufe rastend gegeneinander fixiert werden.

4. Verfahren nach einem der Ansprüche 1 bis 3,
**dadurch gekennzeichnet, dass** ein transparenter Reaktionskunststoff (13) eingespritzt wird.

5. Verfahren nach Anspruch 4 und einem der Ansprüche 1 bis 3,
**dadurch gekennzeichnet, dass** die mindestens zwei Trägerteile (4, 5) der Sichtseite (2) zugewandt mit einer Dekorschicht (6) versehen sind, und wobei die Dekorschicht (6) auf der Sichtseite (2) mit einer transparenten Deckschicht (7) versehen wird, umfassend folgende Verfahrensschritte:
- die Trägerteile (4, 5) werden in den mindestens zwei Formwerkzeughälften (11, 12) bezogen auf den Querschnitt außenseitig der Dekorschicht (6) mit dem transparenten Reaktionskunststoff (13) derart umspritzt, dass der transparente Reaktionskunststoff (13) in den Spalt (10) eindringt;
- die auf Distanz zueinander gehaltenen Trägerteile (4, 5) werden derart aufeinander zu bewegt, dass sich der Spalt (10) schließt, solange der transparente Reaktionskunststoff (13) noch flüssig ist;
- die Trägerteile (4, 5) werden in dieser Position zumindest so lange gegeneinander fixiert, bis der transparente Reaktionskunststoff (13) zur Bildung der transparenten Deckschicht (7) auf der Außenseite der Dekorschicht (6) und zur Bildung der einteilig monolithisch mit der Deckschicht (7) ausgebildeten Klebenaht (17) in der Verbindungsfuge (3) hinreichend ausgehärtet ist.

6. Verfahren nach Anspruch 5, umfassend folgende Verfahrensschritte:
- In die der Sichtseite (2) zugeordneten Formwerkzeughälften (11, 12) wird je ein Einlegeteil (14, 15) eingelegt, welche zur Formung der Deckschicht (7) auf der Sichtseite (2) vorgesehen sind;
- die mit dem Spalt (10) auf Distanz zueinander gehaltenen Trägerteile (4, 5) werden zwischen die Formwerkzeughälften (11, 12) eingelegt, und die Formwerkzeughälften (11, 12) unter Bildung eines Hohlraumes (16) zwischen der Dekorschicht (6) und den Einlegeteilen (14, 15) geschlossen;
- der Hohlraum (16) wird mit dem transparenten Reaktionskunststoff (13) ausgespritzt;
- die mit dem Reaktionskunststoff (13) überspritzten und an der Verbindungsfuge (3) verbundenen Trägerteile (4, 5) werden zusammen mit den daran anhaftenden Einlegeteilen (14, 15) aus den Formwerkzeughälften (11, 12) entnommen.

7. Verfahren nach Anspruch 6,
**dadurch gekennzeichnet, dass** die mit dem Reaktionskunststoff (13) überspritzten Trägerteile (4, 5) zusammen mit den daran anhaftenden Einlegeteilen (14, 15) aus den Formwerkzeughälften (11, 12) entnommen werden, noch bevor der Reaktionskunststoff (13) vollständig ausgehärtet ist, und dass die Aushärtung des Reaktionskunststoffes (13) mit den daran anhaftenden Einlegeteilen (14, 15) außerhalb der Formwerkzeughälften (11, 12) erfolgt.

8. Dekorteil (1) insbesondere für ein Kraftfahrzeug, wobei das Dekorteil (1) einen geschlossenen Querschnitt mit einer äußeren Sichtseite (2) aufweist und insbesondere als Kranz eines Lenkrades ausgebildet ist, wobei das Dekorteil (1) mindestens zwei entlang einer Verbindungsfuge (3) verbundene Trägerteile (4, 5) aufweist, **dadurch gekennzeichnet, dass** die Trägerteile (4, 5) in der Verbindungsfuge (3) mittels einer Klebenaht (17) aus einem Reaktionskunststoff (13) miteinander verbunden sind, und dass zumindest eines der Trägerteile (4, 5) des Dekorteiles (1) mit ersten Fixiermitteln versehen ist, die die Trägerteile (4, 5) während des Herstellverfahrens derart auf Distanz zueinander halten, dass zwischen Kanten (8, 9, 23, 24) der Trägerteile (4, 5), die an der Verbindungsfuge (3) aneinander angrenzen, ein Spalt (10) gebildet ist.

9. Dekorteil nach Anspruch 8,
**dadurch gekennzeichnet, dass** zumindest eines der Trägerteile (4, 5) des Dekorteiles (1) mit zweiten Fixiermitteln versehen ist, die die Trägerteile (4, 5) während des Herstellverfahrens bei geschlossenem Spalt (10) gegeneinander fixieren.

10. Dekorteil nach Anspruch 8 oder 9,
**dadurch gekennzeichnet, dass** die ersten Fixiermittel und/oder die zweiten Fixiermittel durch Rasthaken (18, 19) sowie den Rasthaken (18, 19) zugeordnete Rastkanten (20, 21) gebildet sind.

11. Dekorteil nach einem der Ansprüche 8 bis 10,
**dadurch gekennzeichnet, dass** die ersten Fixiermittel und/oder die zweiten Fixiermittel unmittelbar angrenzend an die Kanten (8, 9, 23, 24) der Trägerteile (4, 5) angeordnet sind.

12. Dekorteil nach einem der Ansprüche 8 bis 11,
**dadurch gekennzeichnet, dass** die ersten Fixiermittel und die zweiten Fixiermittel entlang der Verbindungsfuge (3) wechselseitig angeordnet sind.

13. Dekorteil nach einem der Ansprüche 8 bis 12,
**dadurch gekennzeichnet, dass** angrenzend an die Kanten (8, 9, 23, 24) Zentriermittel insbesondere in Form von Zentriervorsprüngen (22) zur gegenseitigen Ausrichtung der Trägerteile (4, 5) angeordnet sind.

14. Dekorteil nach einem der Ansprüche 8 bis 13,
**dadurch gekennzeichnet, dass** die mindestens zwei Trägerteile (4, 5) der Sichtseite (2) zugewandt mit einer Dekorschicht (6) versehen sind, wobei die Dekorschicht (6) auf der Sichtseite (2) mit einer transparenten Deckschicht (7) versehen ist, und wobei die transparente Deckschicht (7) auf der Außenseite der Dekorschicht (6) sowie die Klebenaht (17) in der Verbindungsfuge (3) zwischen den Trägerteilen (4, 5) einteilig monolithisch aus einem transparenten Reaktionskunststoff (13) gebildet sind.

## Claims

1. Method for producing a decorative part (1), in particular for a motor vehicle, wherein the decorative part (1) comprises a closed cross-section with an external visible side (2) and is in particular embodied as the rim of a steering wheel, and the decorative part (1) comprises at least two support parts (4, 5) to be connected along a connecting joint (3), comprising the following method steps:
- the support parts (4, 5) are placed in at least two molding tool halves (11, 12) so that the support parts (4, 5) of the decorative part (1) are held at a distance from one another other via a gap between edges (8, 9, 23, 24) of the support parts (4, 5) which adjoin one another at the connecting joint;
- a reaction plastic (13) is then injected into the at least two molding tool halves (11, 12) so that the reaction plastic (13) penetrates the gap (10);
- the support parts (4, 5) held at a distance from one another are then moved towards one another so that the gap (10) is closed whilst the reaction plastic (13) is still liquid;
- the support parts (4, 5) are fixed in this position against one another at least until the reaction plastic (13) has cured sufficiently to form a bond seam (17) in the connecting joint (3).

2. Method as claimed in claim 1,
**characterised in that** the support parts (4, 5) of the decorative part (1) are held in a latched arrangement at a distance from one another in a first latch stage to create the gap (10).

3. Method as claimed in claim 1 or 2,
**characterised in that** the support parts (4, 5) of the decorative part (1) are fixed against one another in a latched arrangement in a second latching stage when the gap (10) is closed.

4. Method as claimed in one of claims 1 to 3, **characterised in that** a transparent reaction plastic (13) is injected.

5. Method as claimed in claim 4 and one of claims 1 to 3,
**characterised in that** the at least two support parts (4, 5) are provided with a decorative layer (6) facing the visible side (2), and the decorative layer (6) is provided with a transparent cover layer (7) on the visible side (2), comprising the following method steps:
- the support parts (4, 5) are coated in the at least two molding tool halves (11, 12) with the transparent reaction plastic (13) on the outer side of the decorative layer (6) with respect to the cross-section, such that the transparent reaction plastic (13) penetrates the gap (10);
- the support parts (4, 5) held spaced at a distance from one another are moved towards one another so that the gap (10) is closed whilst the transparent reaction plastic (13) is still liquid;
- the support parts (4, 5) are fixed against each other in this position at least until the transparent reaction plastic (13) has cured sufficiently in the connecting joint (3) to form the transparent cover layer (7) on the outer side of the decorative layer (6) and to form the bond seam (17) monolithically formed in one piece with the cover layer (7).

6. Method as claimed in claim 5, comprising the following method steps:
- in the molding tool halves (11, 12) allocated to the visible side (2), one insert (14, 15) each is inserted which is provided for forming the cover layer (7) on the visible side (2);
- the support parts (4, 5) held spaced at a distance from one another forming the gap (10) are inserted between the molding tool halves (11, 12) and the molding tool halves (11, 12) are closed to form a hollow space (16) between the decorative layer (6) and the inserts (14, 15);
- the hollow space (16) is injected with the transparent reaction plastic (13);
- the support parts (4, 5) onto which the reaction plastic (13) was injected and which are connected at the connecting joint (3) are removed from the molding tool halves (11, 12) together with the inserts (14, 15) adhering to them.

7. Method as claimed in claim 6,
**characterised in that** the support parts (4, 5) onto which the reaction plastic (13) has been injected are removed from the molding tool halves (11, 12) together with the inserts (14, 15) adhering thereto before the reaction plastic (13) has completely cured, and that the curing of the reaction plastic (13) is accomplished with the inserts (14, 15) adhering thereto outside the molding tool halves (11, 12).

8. Decorative part (1), in particular for a motor vehicle, wherein the decorative part (1) comprises a closed cross-section with an external visible side (2) and is in particular embodied as the rim of a steering wheel, and the decorative part (1) comprises at least two support parts (4, 5) connected along a connecting joint (3), **characterised in that** the support parts (4, 5) are connected to one another by means of a bond seam (17) of a reaction plastic (13) in the connecting joint (3), and that at least one of the support parts (4, 5) of the decorative part (1) is provided with first fixing means which hold the support parts (4, 5) at a distance from one another during the production process so that a gap (10) is formed between edges (8, 9, 23, 24) of the support parts (4, 5) which adjoin one another at the connecting joint (3).

9. Decorative part as claimed in claim 8, **characterised in that** at least one of the support parts (4, 5) of the decorative part (1) is provided with second fixing means which fix the support parts (4, 5) against one another during the production process with the gap (10) being closed.

10. Decorative part as claimed in claim 8 or 9, **characterised in that** the first fixing means and/or the second fixing means are formed by latches (18, 19) and latch edges (20, 21) allocated to the latches (18, 19).

11. Decorative part as claimed in one of claims 8 to 10,
**characterised in that** the first fixing means and/or the second fixing means are arranged directly adjacent to the edges (8, 9, 23, 24) of the support parts (4, 5).

12. Decorative part as claimed in one of claims 8 to 11,
**characterised in that** the first fixing means and the second fixing means are arranged alternately along the connecting joint (3).

13. Decorative part as claimed in one of claims 8 to 12,
**characterised in that** centering means, in particular in the form of centering projections (22), are arranged adjacent to the edges (8, 9, 23, 24) for mutual alignment of the support parts (4, 5).

14. Decorative part as claimed in one of claims 8 to 13,
**characterised in that** the at least two support parts (4, 5) are provided with a decorative layer (6) facing the visible side (2), and the decorative layer (6) is provided with a transparent cover layer (7) on the visible side (2), and the transparent cover layer (7) on the outer side of the decorative layer (6) and the bond seam (17) in the connecting joint (3) between the support parts (4, 5) are monolithically formed in one piece from a transparent reaction plastic (13).

## Revendications

1. Procédé de fabrication d'une pièce décorative (1), notamment pour un véhicule automobile, la pièce décorative (1) présentant une section transversale fermée avec un côté extérieur visible (2), et étant notamment réalisée en tant que couronne d'un volant de direction, et la pièce décorative (1) présentant au moins deux parties de support (4, 5) à assembler le long d'un joint d'assemblage (3), le procédé comprenant les étapes de procédé suivantes :
- les parties de support (4, 5) sont placées dans au moins deux moitiés d'outillage de moulage (11, 12) de manière telle, que les parties de support (4, 5) de la pièce décorative (1) soient maintenues mutuellement à distance par l'intermédiaire d'un interstice, entre des bords (8, 9, 23, 24) des parties de support (4, 5), qui sont mutuellement voisins au niveau du joint d'assemblage ;
- à la suite de cela, une matière plastique de réaction (13) est injectée dans lesdits au moins deux moitiés d'outillage de moulage (11, 12) de manière telle, que la matière plastique de réaction (13) pénètre dans l'interstice (10) ;
- les parties de support (4, 5) maintenues mutuellement à distance sont ensuite déplacées l'une vers l'autre de manière telle, que l'interstice (10) se ferme pendant que la matière plastique de réaction (13) est encore liquide ;
- les parties de support (4, 5) sont fixées l'une contre l'autre dans cette position au moins jusqu'à ce que la matière plastique de réaction (13) soit suffisamment durcie pour former un joint de collage (17) dans le joint d'assemblage (3).

2. Procédé selon la revendication 1,
**caractérisé en ce que** les parties de support (4, 5) de la pièce décorative (1) sont maintenues mutuellement à distance par encliquetage réciproque dans un premier étage d'encliquetage, en formant ainsi l'interstice (10).

3. Procédé selon la revendication 1 ou la revendication 2,
**caractérisé en ce que** les parties de support (4, 5) de la pièce décorative (1) sont fixées l'une contre l'autre par encliquetage dans un deuxième étage d'encliquetage, pour un interstice (10) fermé.

4. Procédé selon l'une des revendications 1 à 3, **caractérisé en ce que** l'on injecte une matière plastique de réaction (13) transparente.

5. Procédé selon la revendication 4 et l'une des revendications 1 à 3,
**caractérisé en ce que** lesdites au moins deux parties de support (4, 5) sont pourvues sur leur côté orienté vers le côté visible (2), d'une couche décorative (6), la couche décorative (6) étant munie sur le côté visible (2), d'une couche de couverture (7) transparente, le procédé comprenant les étapes de procédé suivantes :
- la matière plastique de réaction (13) transparente est injectée dans lesdites au moins deux moitiés d'outillage de moulage (11, 12), autour des parties de support (4, 5), du côté extérieur de la couche décorative (6), en se référant à la section transversale, de manière telle que la matière plastique de réaction (13) transparente pénètre dans l'interstice (10) ;
- les parties de support (4, 5) maintenues mutuellement à distance sont ensuite déplacées l'une vers l'autre de manière telle, que l'interstice (10) se ferme pendant que la matière plastique de réaction (13) transparente est encore liquide ;
- les parties de support (4, 5) sont fixées l'une contre l'autre dans cette position, au moins jusqu'à ce que la matière plastique de réaction (13) transparente soit suffisamment durcie pour former la couche de couverture (7) transparente sur le côté extérieur de la couche décorative (6), et pour former dans le joint d'assemblage (3), le joint de collage (17) réalisé d'un seul tenant, de manière monolithique avec la couche de couverture (7).

6. Procédé selon la revendication 5, comprenant les étapes de procédé suivantes :
- dans chacune des moitiés d'outillage de moulage (11, 12) affectées au côté visible (2), est placée respectivement une pièce d'insert (14, 15), ces pièces d'insert étant prévues pour former la couche de couverture (7) sur le côté visible (2) ;
- les parties de support (4, 5) maintenues mutuellement à distance moyennant l'interstice (10), sont placées entre les moitiés d'outillage de moulage (11, 12), et les moitiés d'outillage de moulage (11, 12) sont fermées en créant une cavité (16) entre la couche décorative (6) et les pièces d'insert (14, 15) ;
- la matière plastique de réaction (13) transparente est injectée dans la cavité (16) ;
- les parties de support (4, 5) surmontées par injection avec la matière plastique de réaction (13) et assemblées au niveau du joint d'assemblage (3), sont prélevées, en commun avec les pièces d'insert (14, 15) qui y adhèrent, hors des moitiés d'outillage de moulage (11, 12).

7. Procédé selon la revendication 6,
**caractérisé en ce que** les parties de support (4, 5) surmontées par injection avec la matière plastique de réaction (13) sont prélevées, en commun avec les pièces d'insert (14, 15) qui y adhèrent, hors des moitiés d'outillage de moulage (11, 12), encore avant que la matière plastique de réaction (13) ait totalement durci, et **en ce que** le durcissement de la matière plastique de réaction (13) avec les pièces d'insert (14, 15) qui y adhèrent s'effectue en-dehors des moitiés d'outillage de moulage (11, 12).

8. Pièce décorative (1), notamment pour un véhicule automobile, la pièce décorative (1) présentant une section transversale fermée avec un côté extérieur visible (2), et étant notamment réalisée en tant que couronne d'un volant de direction, et la pièce décorative (1) présentant au moins deux parties de support (4, 5) à assembler le long d'un joint d'assemblage (3), **caractérisée en ce que** les parties de support (4, 5) sont assemblées au niveau du joint d'assemblage (3) au moyen d'un joint de collage (17) en une matière plastique de réaction (13), et **en ce que** l'une au moins des parties de support (4, 5) de la pièce décorative (1) est pourvue de premiers moyens de fixation, qui, pendant le processus de fabrication maintiennent les parties de support (4, 5) mutuellement à distance, de manière telle qu'entre les bords (8, 9, 23, 24) des parties de support (4, 5), qui sont mutuellement voisins au niveau du joint d'assemblage (3), soit formé un interstice (10).

9. Pièce décorative selon la revendication 8,
**caractérisée en ce que** l'une au moins des parties de support (4, 5) de la pièce décorative (1) est pourvue de deuxièmes moyens de fixation, qui fixent l'une contre l'autre les parties de support (4, 5) pendant le processus de fabrication, pour un interstice (10) fermé.

10. Pièce décorative selon la revendication 8 ou la revendication 9,
**caractérisée en ce que** les premiers moyens de fixation et/ou les deuxièmes moyens de fixation sont formés par des crochets d'encliquetage (18, 19) ainsi que par des bords d'encliquetage (20, 21) associés aux crochets d'encliquetage (18, 19).

11. Pièce décorative selon l'une des revendications 8 à 10,
**caractérisée en ce que** les premiers moyens de fixation et/ou les deuxièmes moyens de fixation sont agencés de manière directement adjacente aux bords (8, 9, 23, 24) des parties de support (4, 5).

12. Pièce décorative selon l'une des revendications 8 à 11,
**caractérisée en ce que** les premiers moyens de fixation et les deuxièmes moyens de fixation sont agencés de manière alternativement opposée le long du joint d'assemblage (3).

13. Pièce décorative selon l'une des revendications 8 à 12,
**caractérisée en ce que** des moyens de centrage, notamment sous la forme de protubérances de centrage (22), sont agencés de manière adjacente aux bords (8, 9, 23, 24), pour l'orientation réciproque des parties de support (4, 5) les unes par rapport aux autres.

14. Pièce décorative selon l'une des revendications 8 à 13,
**caractérisée en ce que** lesdites au moins deux parties de support (4, 5) sont pourvues, sur leur côté orienté vers le côté visible (2), d'une couche décorative (6), la couche décorative (6) étant pourvue sur le côté visible (2), d'une couche de couverture (7) transparente, et la couche de couverture (7) transparente sur le côté extérieur de la couche décorative (6), ainsi que le joint de collage (17) dans le joint d'assemblage (3) entre les parties de support (4, 5) étant réalisés d'un seul tenant, de manière monolithique, en une matière plastique de réaction (13) transparente.
